# EUROPEAN PATENT SPECIFICATION

(11) **EP 2 884 837 B1**
(45) Date of publication and mention of the grant of the patent: **06.12.2017**
(21) Application number: 13829489.7
(22) Date of filing: 16.08.2013
(51) Int. Cl.: A01K 15/04, A01K 1/06, A01K 15/00

(54) **IMPROVEMENTS IN ANIMAL HANDLING DEVICES**
VERBESSERUNGEN AN VORRICHTUNGEN ZUM UMGANG MIT TIEREN
AMÉLIORATION D'UN DISPOSITIF DE CONTENTION D'UN ANIMAL

(30) Priority: 16.08.2012 NZ 60187312; 25.07.2013 NZ 61360613
(43) Date of publication of application: 24.06.2015
(73) Proprietor: Harris, Catherine Michelle, Hamilton 3204 (NZ); Harris, Arvin James, Hamilton 3204 (NZ); Lacme Holding (société Anonyme), 92250 La Garenne Colombes (FR)
(72) Inventor: FAGAN, Robin Christopher Feltrim, Hamilton 3204 (NZ)
(74) Representative: Laget, Jean-Loup
(86) International application number: PCT/NZ2013/000147
(87) International publication number: WO 2014/027904

(56) References cited:
- EP-B1- 0 451 906
- FR-A1- 2 206 901
- FR-A1- 2 385 326
- US-A- 3 095 858
- US-A- 3 777 715
- US-A- 4 309 964

## Description

### TECHNICAL FIELD

The present invention relates to an animal handling device, when used in a portable livestock handling system. The invention has particular application to the handling of livestock such as sheep.

### BACKGROUND ART

Animal husbandry will often require the animal being cared for to undergo veterinary treatment or inspections. To allow the appropriate treatment to be performed will usually require the temporary restraining or immobilisation of the animal.

For example, it is common in the case of sheep to restrain it in order to carry out shearing or crutching (the latter is the removal of wool from around the rear quarters of the sheep).

It may also be necessary to restrain the sheep in order to deliver boluses, apply a drench or drenches, take blood, apply and read ear tags, conduct pregnancy testing, inspect teeth, weigh individual animals and so on.

While the restraining of the sheep can be done manually, this will often require two people, one to restrain the animal and one to carry out the necessary treatment. This is not only a relatively time consuming, considerable energy can be expended in restraining the sheep.

Therefore, animal handling devices are often used in animal husbandry to temporarily hold and secure the animal for inspection and treatment as required.

These devices are essentially a large clamp in the form of a base with a pair of opposing walls. One or both of the walls are arranged to pivot towards and away from each other. In this manner, the animal, standing on the base, can be clamped and immobilised.

An example of such a device used for this purpose is disclosed in New Zealand Patent No. 209221. This patent describes what is referred to as an animal "crush", used in the shearing or crutching of sheep.

The crush has side plates which can be moved with respect to each other by pulling upon a flexible restraint. The resulting movement of the side plates effectively clamp and hold the sheep in position. Usually, this leaves the head, behind and top side of the body of the sheep readily accessible. This allows the animal to be closely inspected or treated without the user of the device having to physically restrain the animal. However, a problem with conventional crushers of this type is the difficulty that may be experienced in accessing the specific areas of the animal that require treatment.

For example, when crutching sheep, access to the rear quarters of the sheep is desirable.

However, the sheep may have been clamped such that its rear quarters are well within the crush. It can be too difficult and time consuming to release the clamp in order to reposition the sheep. Therefore, the user has to reach around the edges of the panels in order to crutch the sheep.

Furthermore, as the panels of most crushes are solid, it can also be difficult to access the belly of the animal whether to perform some veterinary treatment or simply to shear the belly wool. The same is true for treating the feet of the clamped animal.

This can not only be time consuming, but can result in extended periods of time for the user in awkward body positions as they access difficult to reach parts of the sheep. This can result in strain on the user's back and limbs, which may be particularly problematic when large numbers of animals need to be treated.

US patent n° 4 309 964 discloses a machine to transfer a sheep from a standing position into a cradle where the sheep lies on its back. The sheep is caused to fall from a race platform onto a ramp and then to be rolled over the ramp into the cradle. During this operation, the sheep is not clamped and is free to move.

US patent n° 3 095 858 discloses an animal catching device associated with an automotive vehicle to pursue and catch sheep in fields. Sheep is enclosed in a pen associated with the vehicle. The sheep is not clamped and is free to move with the vehicle.

FR patent n° 2 206 901 discloses a temporary trap for animals. The trap is in fixed position between two pens, it has no base, and animals walk on the ground.

FR patent n° 2 385 326 discloses a support device to turn an animal upside down, in which the animal stands on ground. The device has no base to support the animal.

It is an object of the present invention to address the foregoing problems or at least to provide the public with a useful choice.

Throughout this specification, the word "comprise", or variations thereof such as "comprises" or "comprising", will be understood to imply the inclusion of a stated element, integer or step, or group of elements integers or steps, but not the exclusion of any other element, integer or step, or group of elements, integers or steps.

Further aspects and advantages of the present invention will become apparent from the ensuing description which is given by way of example only.

### DISCLOSURE OF THE INVENTION

According to one aspect of the present invention, there is provided an animal handling device, according to claim 1, used in a portable livestock handling system including a wheeled chassis wherein the animal handling device includes
a substantially rectangular base, having two longer edges and two shorter edges,
a first wall, and
a second wall, wherein the walls are joined to the longer edges of the base and, in use, are substantially at right angles to the base and wherein the second wall is pivotally moveable relative to the first wall, to restrain an animal standing on the base and positioned between the first and second walls, wherein the second wall includes a plurality of segments, wherein at least one segment is pivotally moveable relative to a second segment of the wall, wherein the moveable segment is configured to move in a first direction away from an animal positioned between the first and second walls and a second direction towards the animal, wherein the moveable segment is configured to, when moved in the second direction, prevent rearward movement of the animal once the second wall is moved away from the first wall.

According to another aspect of the present invention there is provided a method of using the animal handling device as described above, the method according to claim 16 including the steps of:
a) allowing an animal to enter the animal handling device and stand on the base;
b) moving the second wall relative to the first wall, thereby clamping the animal between the walls;
c) moving a first segment of the second wall in a first direction to expose a portion of the body of the animal in order to perform a treatment on the animal;
d) moving the first segment of the second wall in a second direction to prevent rearward movement of the animal once the second wall is moved away from the first wall.
Herein is also disclosed but not claimed, a programmable logic controller (PLC) for an animal handling device, wherein the animal handling device includes a base, a first wall, and a second wall, wherein the walls are substantially at right angles to the base and wherein the second wall is pivotally moveable relative to the first wall, wherein the second wall includes a plurality of segments, wherein at least one segment is pivotally moveable relative to a second segment of the wall, wherein the moveable segment is configured to move in a first direction towards an animal positioned between the first and second walls and a second direction away from the animal, and wherein the animal handling device also includes an actuating mechanism and/or displacement system for the second wall, wherein the actuating mechanism and/or displacement system is operable via a control panel including the PLC, wherein the PLC is configured to execute the following steps:
a) allowing an animal to enter the animal handling device and stand on the base;
b) moving the second wall relative to the first wall, thereby clamping the animal between the walls;
c) moving a first segment of the second wall in a first direction.
Herein is also disclosed but not claimed, a programmable logic controller (PLC) substantially as described above, wherein the PLC is configured to execute the additional step of:
a) moving the first segment of the second wall in a second direction.

The present invention provides an animal handling device which is integrated with a portable livestock handling system. The animal handling device is formed from two opposing walls, wherein one of the walls is segmented, with one of the segments pivotally moveable towards the user to allow access to the animal when it is clamped between the walls of the device. This allows any necessary treatment or inspections to be performed on the animal. When the treatment is completed, the moveable segment can be moved away from the user towards the animal to act as an obstruction to prevent rearward movement of the animal once it is released from the clamp. The invention has particular application to the handling, inspection, and treatment of sheep.

The present invention is particularly useful in the husbandry of sheep, although it should be understood that the invention may have application to other domesticated animals such as goats, calves or pigs. Reference shall now be made throughout the remainder of the specification to the livestock or animals with which the present invention is to be used as being sheep.

The animal handling device should be understood to mean any suitable device that is used to temporarily hold or otherwise secure sheep for inspection and/or veterinary treatment if desired. The treatment to be performed can include, but is not limited to, crutching, shearing, pregnancy testing, ear tagging, hoof trimming or delivery of medicaments and so on.

Reference should now be made to the animal handling device as being a clamp. The clamp is to be integrated as part of a portable livestock handling apparatus which includes a chassis and wheels. The system may also include additional sections linked to the chassis such as a leadup system and/or a sorting gate.

The clamp should be understood to include a base, a first wall and a second wall, the walls being substantially perpendicular to the base. It should be understood that strict compliance with the term perpendicular is not intended; in some embodiments of the invention, one or both walls may be at an angle to the base, for example at 75°.

The first and second walls define a passage there between for sheep and are moveable with respect to each other to clamp a sheep between the walls. The width of the passage is such that only one sheep at a time can travel through at a time.

It will be appreciated that the space between the opposing walls forms the clamping area in use.

Persons skilled in the art will appreciate that the distance between the walls may vary according to the animal species with which the present invention is to be used. For example, for pigs, the distance between the walls may be less (or more) than that required for sheep.

The base should be understood to mean the portion of the clamp on which the animal stands prior to being clamped by the walls of the device.

Preferably, the base of the clamp is formed from sheet material.

As the base is likely to experience high impacts and loading as sheep run through, the sheet material needs to be durable and hard wearing. It also needs to have minimal or no apertures in which appendages such as feet can be caught, which may cause injury to the sheep.

Therefore, the base may be fabricated from any suitable robust and rigid sheet material, such as sheets of mild steel or the like. Toughened plastics, sheets of plywood or other materials identified as being suitable for use with the present invention by a person skilled in the art may also be used to form the base.

In some embodiments of the present invention, the base may include a textured surface to provide some grip should the invention be used in wet conditions, which may make the base slippery. The base is substantially rectangular in plan view, having two shorter edges and two longer edges substantially in parallel. It will be recognised that for efficient clamping, in which the clamping areas have as large as possible a contact surface with the animal being clamped, it is preferable to have at least two sides that are substantially parallel.

In some embodiments of the present invention, the base may be mounted to a platform.

This has the advantage of elevating the clamp, placing the sheep within at waist or chest level such that the user may not need to stoop over the clamp in use. This may alleviate strain on the user's back.

A platform may also allow the clamp to be manufactured as a module, which may be transportable to allow installation in fixed animal handling systems (which may include yards, pens and races). Alternatively, the platform may be part of a trailer chassis.

In these embodiments, the base may be configured to be pivotally moveable relative to the platform. This allows the clamp to be moved from a substantially vertical orientation, in which the animal is restrained in a standing position, to a substantially horizontal orientation, in which the animal is restrained on its side.

This movement of the base relative to the platform may be achieved in a number of ways readily apparent to a person skilled in the art.

For example, the base may be secured to the platform in a gimbal arrangement such that it, and therefore the clamp, can be tilted towards the horizontal.

In preferred embodiments of the present invention, the platform may be provided with an upright, a portion of which engages with the frame of the first wall and provides a pivot about which the animal handling device can be tilted.

The higher the pivot, the higher the animal handling device is positioned when it is tilted to the horizontal.

Alternatively, one edge of the base may be pivotally mounted to the platform to allow it to moved from the horizontal (the sheep standing on the base) to the vertical (the sheep on its side).

However, this may require the base to be offset on the platform, such that the walls of the clamp rest on the platform when it is on its side rather than being suspended over the side of the platform.

The walls should be understood to be arranged such that they are joined to the base by the sides of the base.

In the invention the walls are joined to the longer sides of the base. It is also disclosed but not claimed, that one or both of the walls be joined to the base inwards of its sides. This means that a ledge may be formed behind one or both of the walls which, in some embodiments of the invention, can provide a working platform for the user.

At least one of the walls of the clamp should be understood to be pivotally or otherwise hingedly movable relative to the other wall. This can be achieved in a number of ways.

For example, one of the walls may be secured to the base in a hinge-like arrangement, the hinge having a horizontal axis. Persons skilled in the art will readily appreciate ways in which one or both walls may be joined to the base such as to allow movement of the walls.

In preferred embodiments of the present invention, the first wall is fixed relative to the base with the opposing wall being hingedly movable. As noted above, it will be appreciated that the space between the opposing walls forms the clamping area in use.

The user of the invention will typically stand behind the fixed wall when using the invention.

While reference is made throughout the remainder of the present specification to only one wall being movable, this is not meant to be limiting and in some embodiments of the present invention, both walls may be moveable. However, extra care may be required to ensure that users of these embodiments do not injure themselves standing behind a movable wall as it moves back and forth.

The second wall includes an actuating mechanism to move the wall about its axis of rotation.

In preferred embodiments of the invention, the actuating mechanism is a ram although persons skilled in the art will appreciate other types of arrangements for moving the wall may be readily used. Other examples of an actuating system suitable for use with the present invention may include various hydraulic, pneumatic or even electrical actuators or servo-motors.

Reference shall now be made throughout the remainder of the specification to the actuating mechanism being a ram but it should be understood that this is not meant to be limiting. Preferably, the ram includes a piston which engages with a suitable mounting point on the non-contact side of the second wall.

The ram also includes a housing, wherein at least a portion of the piston is slideably moveable within the housing. The housing is fixed to the base. It will be appreciated that as the piston moves out of the housing, it moves the second wall towards the first, thereby clamping any sheep that is positioned between the two walls.

In preferred embodiments of the present invention, the walls are substantially rectangular having two short edges and two long edges arranged substantially in parallel.

In preferred embodiments of the present invention, the walls are formed from sheet material, such as plywood, and a frame of metal tubing, for example steel, to which the sheet material is fixed.

It will be appreciated that the sheet material forms the contact surfaces of the clamp, which bears against the sheep in use.

As previously described, some embodiments of the invention may be configured to turn the clamp onto its side, with the fixed wall bearing the weight of the sheep that has been clamped. Thus, the fixed wall may be engineered accordingly, with heavier tubing for the frame of the wall and more durable sheet material.

It is also not beyond the scope of the present invention, that one or both of the walls are simply be formed from a sheet of material, sufficiently engineered such that there is no need for a frame structure. A further alternative is that one or both of the walls are formed as a frame structure. This can assist in improving access to the sheep being clamped as the user may be able to reach between the frame members.

The second wall is formed from a plurality of segments. It will be appreciated that each segment may include metal tubing or the like on its non-contact side to provide rigidity and support for the sheet material.

The second wall includes at least a first segment which is pivotally or otherwise hingedly movable relative to a second segment of the wall.

The movement of the first segment can be achieved in a number of ways, but preferably, a barrel or butt hinge may be used.

These types of hinges are formed from two parts, each with a plate to be mounted to the respective segments of the wall. Each plate includes on one edge a series of loops which interlock with the loops of the opposing plate to form a tube like structure through which a pin passes. However, this is just an example of one way of allowing the movement of the first segment and is not meant to be limiting.

It should be understood that the first segment is able to move towards and away from the sheep when it is in the clamp. This serves two distinct purposes.

The first is that when the segment is moved away from the sheep, this exposes a portion of the sheep's body.

Typically, this will occur when the clamp has been tilted to the horizontal such that the sheep is lying on its side. It will be appreciated that in this configuration, the second wall is the uppermost wall of the clamp.

In preferred embodiments of the invention, the first segment of the second wall corresponds substantially with the rear quarters of the sheep, such that when the segment is pivoted or otherwise moved about its axis away from the sheep, the rear quarters of the sheep are exposed. The user of the device can then attend to any necessary treatment of that part of the body having better access than would otherwise be the case if the wall was not segmented.

The second purpose is that when the segment is moved towards the sheep such that it bears against a portion of the rear quarters of the sheep that is being clamped, it prevents rearward movement of the sheep once the clamping action has been released (i.e. the second wall moves away from the fixed wall).

Typically, this will occur when the clamp has been returned to a substantially upright position so the sheep is standing on its feet. Being prevented from moving backwards, the sheep is more likely to move forward quickly out of the clamping area.

It also prevents any further sheep from entering the clamp until the first sheep has been cleared. When the first segment is returned to a position that is in line with the second or immovable segment, the second sheep is then able to enter the clamp.

In preferred embodiments of the present invention, there is a third segment of the wall which is hingedly movable to the second segment. It will be appreciated that the second segment is fixed relative to the first and third segments.

In preferred embodiments of the present invention, the third segment of the wall corresponds to the front quarters of the sheep when the clamp is in use. Thus, when moved away from the sheep, it may allow access to this area of the animal. Additionally, if a sheep is not present, the segment may be articulated such that it prevents passage of sheep straight through the clamping area.

The moveable segments of the second wall may take a variety of shapes.

In preferred embodiments of the present invention, the first segment of the second wall is substantially triangular in shape, with the longest edge of the triangle extending from the corner of the second wall to or near the centre of the bottom edge of the wall.

This corresponds with the rear quarters of the sheep, for which being able to access the loin, tail and rear legs is particularly important. The portion of the upper leg proximate the rear hips of the sheep is still substantially immobilised in this configuration.

In preferred embodiments of the present invention, the third segment of the second wall is substantially rectangular in shape, the longer edges of the rectangle being arranged in a substantially vertical orientation.

This enables relatively easy access to the front quarters of the sheep, from its head down to its front leg, while still substantially immobilising the sheep at its shoulders.

However, these particular shapes for the segments of the second wall are not meant to be limiting. Persons skilled in the art that the animal species with which the present invention is to be used may have a bearing on the shape and dimensions of the segments, as well manufacturing and cost considerations.

The present invention includes a displacement system, the system configured to move at least the first segment of the second wall. The displacement system may be achieved in a number of ways.

For example, the displacement system may be an elongate bar spanning the first and second segments.

The bar can be thought of as a slideable bolt. In use, it is withdrawn so it no longer bears against the first segment. The user may then simply fold the segment about its hinge. To assist in this, the segment may be provided with a handle or the like on its non-contact side.

The segment may also include catches to hold the segment in position once it has been moved to the desired position. The catches may engage with the immovable segment of the wall or in some embodiments, the base of the invention. Persons skilled in the art will readily appreciate other ways to hold the segment in position when it has been displaced and these are within the scope of the present invention.

In other embodiments of the present invention, the displacement system may be a ram. The ram may be similar to that previously described as being suitable for use for pivoting the second wall and includes a piston slideably disposed within a housing.

Reference shall now be made throughout the remainder of the specification to the displacement system being a ram but it should be understood that this is not meant to be limiting. Other examples of a displacement system suitable for use with the present invention may include various hydraulic, pneumatic or even electrical actuators or servo-motors.

The housing is fixed to the second, immovable, segment of the wall, and linked via the piston to the moveable segments. The portion of the piston that is mounted to the moveable segments may be configured with a hook and loop or the like. A complementary fastening mechanism secures the piston to the moveable segment.

It will be appreciated that the mounting of the housing to the second segment of the wall allows sufficient displacement of the moveable segment away from the user of the invention so that it sufficiently acts as an obstruction or barrier to rearward movement of the clamped sheep.

If the mounting is too close to the wall, the piston may bear against the axis of movement of the segment, limiting how much it can be moved away from the user. The further out the mounting is from the wall, the greater the displacement of the segment.

It will be appreciated that in some embodiments, two actuators may be provided, these being mounted side-by-side but each linked to a different movable segment.

In preferred embodiments of the present invention, the actuator is bi-directional, with two shafts, one for each movable segment.

In preferred embodiments of the present invention, the displacement system is configured to be operable via switches or the like. This requires much less energy from the user to operate.

In this embodiment of the invention, the clamp may be provided with a control panel or the like which is operable by the user in order to operate the actuating mechanism and/or displacement system.

In preferred embodiments of the present invention, the control panel may be mounted to a post or pillar extending from the base or fixed wall. The control panel may include wiring linking the panel to the displacement system. Alternatively, it will be appreciated by persons skilled in the art that the control panel may be configured to wirelessly send operational signals to the displacement system.

The control panel may include a programmable logic controller (PLC) or computer to automate some or all of the process of using the clamp. Persons skilled in the art will readily identify ways in which this aspect of the invention may be implemented using appropriate sensors and programming of the PLC.

For example, for embodiments of the invention in which the clamp is mounted to a platform in such manner to allow it to be tilted from a vertical orientation, in which the sheep being clamped is standing, to a horizontal orientation, in which the sheep is on its side, the PLC may automatically activate the first segment when the clamp is initially tilted to allow access to the rear quarters of the sheep.

When the clamp is returned to a horizontal position, the PLC may activate the first segment such that it moves behind the sheep to encourage it forwards and out of the clamp, while preventing further sheep from entering the clamp.

After a set time period, for example three seconds (or after a suitable sensor determines that the sheep is no longer within the clamp), the first segment may be withdrawn to be in line with the second segment to allow another sheep to enter the clamp. At the same time, the third segment may be actuated to close off the exit of the clamp to prevent the sheep entering the clamp from simply passing through and following the first sheep.

There may be a number of other considerations with respect to the timing and movement of the movable segments of the clamp that may affect programming of the PLC in order to enhance the processing of sheep or other animals using the clamp. These considerations may ultimately depend on the requirements of the user.

It will be appreciated that the above description of the displacement system is not meant to be limiting and other ways of articulating the segments using automated or semi-automated apparatus will be readily apparent to persons skilled in the art.

The present invention is particularly advantageous as it provides:
- a means of temporarily securing an animal for treatment and inspection purposes while still permitting access to the areas of the animal most likely to require attention, namely the head, feet and loin;
- a means of preventing rearward movement of the animal when it is released from the clamp;
- a means of automating the operation of the clamp for efficient operation when processing animals with the clamp;
- it may also relieve or reduce fatigue on the user of the clamp as less stooping may be required to perform any necessary treatment.

### BRIEF DESCRIPTION OF DRAWINGS

Further aspects of the present invention will become apparent from the following description which is given by way of example only and with reference to the accompanying drawings in which:
- Figure 1: a perspective view of one embodiment of the present invention in use;
- Figure 2: is a side view of the moveable wall of the embodiment illustrated in Figure 1; and
- Figure 3: is another perspective view of the embodiment of the invention illustrated in Figure 1.

### BEST MODES FOR CARRYING OUT THE INVENTION

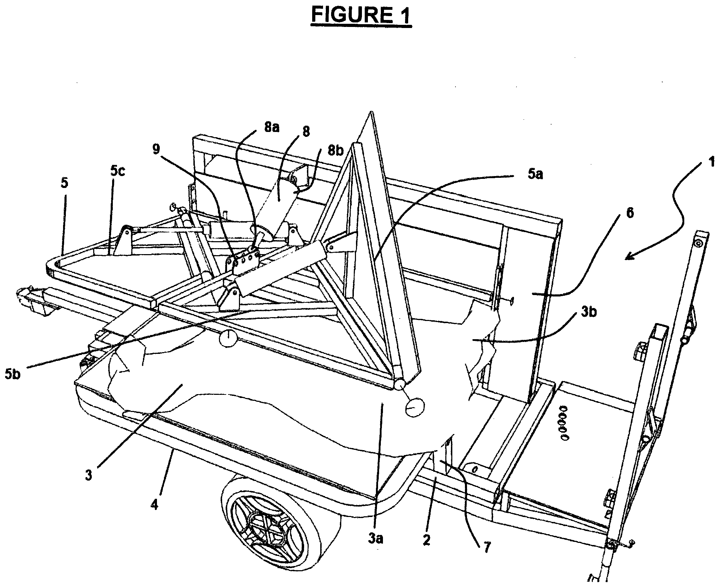

The present invention (generally indicated by arrow 1) is an animal holding device as illustrated in Figure 1 and shows the invention (1) atop a trailer platform (2) and in use with an animal in the form of a sheep (3) clamped between two opposing walls (4, 5) and a base (6).

The device (1) is pivotally mounted to the platform (2) via an upright (7). The base (6) has been tilted from a horizontal position to a vertical position for the purpose of treating the sheep (3).

The first wall (4) is fixed relative to the base (6) and, in use, is the surface against which the sheep (6) being treated bears when the base is tilted relative to the platform (2). Because this wall bears the weight of the animal It is built more robustly as a consequence.

The second wall (5) is moveable via a ram (8). The piston end (8a) of the ram engages with a suitable configured attachment portion (9) on the wall while the housing (8b) of the ram is fixed to the base (6). As the piston moves in and out of the housing, the entire wall moves to and fro, clamping and releasing the sheep.

It will be noted that the second wall (5) is formed from a plurality of segments (5a, 5b, 5c). This is to allow independent movement of certain segments of the wall.

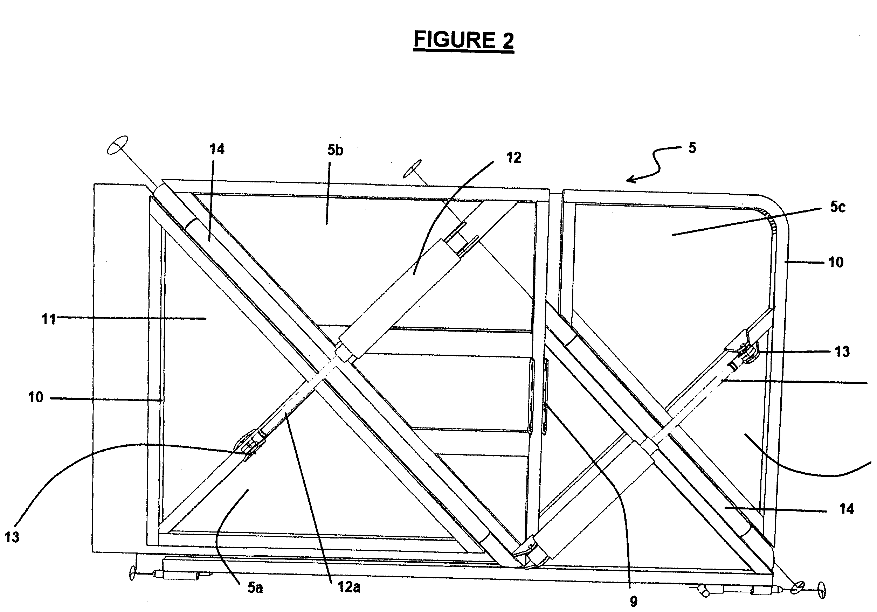

Turning now to Figure 2, it will be seen that the first segment (5a) of the wall (5) is substantially triangular in shape. It is formed from a plurality of frame members (10) and sheet material (11).

The triangular configuration for this section (5a) is intended to allow access to the loin and feet of the sheep (not shown) being restrained, while still bearing against the upper rear quarters of the sheep.

The second segment (5b) of the second wall (5) is fixed. It is this section of the wall to which the ram (not shown) is connected via the attachment portion (9) in order to move the entire second wall to and fro.

In use, this second segment (5b) of the wall (5) bears against the side of the sheep (not shown) and is not intended to be moveable. This is because in most cases, access to the side of the animal is not required for performing most treatments that would be required for a sheep.

A third segment (5c) of the wall (5), substantially polygonal in shape, is similarly formed from frame members (10) and sheet material (11). This corresponds with the front quarters of the sheep, permitting access to the head and feet of the animal.

To articulate the moveable segments, a displacement system in the form of a ram (12) is fixed to the second segment (5b) of the wall (5).

The piston (12a) of the ram (12) extends into a suitable fastening device (13) on the first (5a) and third (5c) segments of the second wall.

As the piston is retracted (12a), this causes the segments (5a, 5c) to pivot about their hinges (14) allowing access to the appropriate quarter of the clamped sheep (not shown).

Returning now to Figure 1, it will be appreciated that, the first segment (5a) has been moved towards the user (not shown), who would normally stand approximate the non-clamping side of the second wall (5). This opens up access to the sheep (3).

It will be appreciated that the configuration of the first segment (5a) allows the fixed or non moveable segment (5b) to still bear against the hip region (3a) of the sheep (3) while leaving the legs and feet (3b) free for inspection.

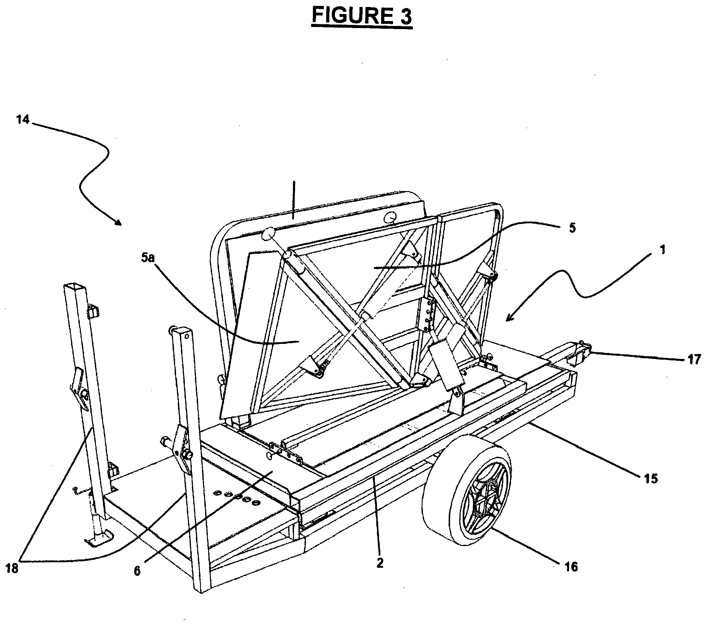

In Figure 3, the device (1) has been tilted back to the vertical such that the base (6) is substantially horizontal upon the platform (2).

The first segment (5a) has now been moved towards the sheep (not shown) and the first wall in preparation for release of the second wall (5).

This provides an obstruction to rearward movement of the sheep (not shown) once the second wall (5) has been moved away from the first wall (4), thereby releasing the clamping pressure.

It will be appreciated from this view that the platform (2) is part of a portable livestock handling system (14), which is the preferred embodiment of the invention. The platform is integrated with a chassis (15) bearing a pair of wheels (16 - only one visible in this view).

At one end of the chassis (15) is provided a towing means (17) which may be engaged with the tow ball of a vehicle (not shown) to allow transport of the overall system. The chassis may include additional sections (such as a sorting gate or a leadup - not shown) which may be mounted to the vertical arms (18) provided to increase the functionality of the system (14).

Aspects of the present invention have been described by way of example only and it should be appreciated that modifications and additions may be made thereto without departing from the scope thereof as defined in the appended claims.

## Claims

1. An animal handling device when used in a portable livestock handling system including a wheeled chassis, wherein the animal handling device includes:
a substantially rectangular base (6) having two longer edges and two shorter edges,
a first wall (4), and
a second wall (5), wherein the walls (4,5) are joined to the longer edges of the base and, in use, are substantially at right angles to the base (6) and wherein the second wall (5) is pivotally moveable relative to the first wall (4) to restrain an animal (3) standing on the base (6) and positioned between the first (4) and second (5) walls,
**characterised in that**
the second wall (5) includes a plurality of segments (5a, 5b, 5c), wherein at least one segment (5a) is pivotally moveable relative to a second segment (5b) of the wall, wherein the moveable segment (5a) is configured to move in a first direction away from the animal positioned between the first (4) and second (5) walls to expose a portion of the body of the animal, and second direction towards the animal, wherein the moveable segment is configured to, when moved in the second direction, prevent rearward movement of the animal once the second wall is moved away from the first wall.

2. The animal handling device as claimed in claim 1 wherein the walls (4, 5) are substantially rectangular having two short edges and two long edges arranged substantially in parallel.

3. The animal handling device as claimed in either claim 1 or claim 2 wherein the second wall (5) includes an actuating mechanism to pivotally move the wall.

4. The animal handling device as claimed in claim 3 wherein the actuating mechanism is a ram (8).

5. The animal handling device as claimed in claim 4 wherein the ram (8) includes a housing (8b), mounted to the base (6), and a piston (8a) configured to engage with a mounting point on the second wall (5).

6. The animal handling device as claimed in claim 5 wherein the piston (8a) is slidably movable within the housing (8b).

7. The animal handling device as claimed in any one of claims 1 to 6 wherein the first segment (5a) is:
• hinged to the second segment (5b); and/or
• substantially triangular in shape, with the longest edge of the triangle extending from an upper corner of the second wall (5) to or near the centre of a bottom edge of the wall.

8. The animal handling device as claimed in any one of claims 1 to 7 wherein the second wall (5) includes a third segment (5c) of the wall pivotally moveable relative to the second segment (5b) of the second wall (5).

9. The animal handling device as claimed in claim 8 wherein the third segment (5c) is:
• hinged to the second segment (5b); and/or
• substantially rectangular in shape, the longer edges of the rectangle being arranged in a substantially vertical orientation.

10. The animal handling device as claimed in any one of claims 1 to 9 wherein the device includes a displacement system, the system configured to move at least the first segment (5a) of the second wall (5).

11. The animal handling device as claimed in claim 10 wherein the displacement system is:
• a slideable elongate bar spanning the first (5a) and second (5b) segments; and/or
• a ram (12).

12. The animal handling device as claimed in claim 11 wherein the ram (12):
• includes a housing, mounted to the second segment (5b), and a piston (12a) configured to engage with a mounting point on the first segment (5a); and/or
• is bi-directional with two pistons, one each configured to engage with a mounting point on the first segment (5a) and a third segment (5c) of the second wall (5).

13. The animal handling device as claimed in claim 12 wherein the displacement system includes a second ram, the second ram including a housing mounted to the second segment (5b), and a piston configured to engage with a mounting point on a third segment (5c).

14. The animal handling device as claimed in either claim 3 or 10 wherein the device is linked to a control panel for the actuating mechanism and/or displacement system, wherein the control panel includes a programmable logic controller.

15. A portable livestock handling system including a wheeled chassis (15) and the animal handling device of claim 1.

16. A method of using the animal handling device as claimed in claim 1, the method including the steps of:
a) allowing an animal to enter the animal handling device and stand on the base;
b) moving the second wall (5) relative to the first wall (4), thereby clamping the animal (3) between the walls (4, 5);
c) moving a first segment (5a) of the second wall (5) in a first direction to expose a portion of the body of the animal in order to perform a treatment on the animal;
d) moving the first segment (5a) of the second wall (5) in a second direction to prevent rearward movement of the animal once the second wall (5) is moved away from the first wall (4).

## Patentansprüche

1. Tierbehandlungsvorrichtung, wenn diese in einem tragbaren Nutzierbehandlungssystem verwendet wird, umfassend ein integriertes Fahrwerk, wobei die Vorrichtung umfasst: eine im Wesentlichen rechteckige Basis (6) mit zwei längeren Kanten und zwei kürzerenKanten,
eine erste Wand (4) und
eine zweite Wand (5), wobei die Wände (4, 5) mit den längeren Kanten der Basis verbunden sind und im Einsatz im Wesentlichen in rechten Winkeln zur Basis (6) stehen und wobei die zweite Wand (5) relativ zur ersten Wand (4) schwenkbar ist, um ein auf der Basis (6) stehendes Tier (3) zurückzuhalten, und zwischen der ersten (4) und zweiten (5) Wand positioniert ist, **dadurch gekennzeichnet, dass**
die zweite Wand (5) eine Mehrzahl Segmente (5a, 5b, 5c) umfasst, wobei mindestens ein Segment (5a) relativ zu einem zweiten Segment (5b) der Wand schwenkbar ist, wobei das bewegliche Segment (5a) derart konfiguriert ist, dass es sich in einer ersten Richtung weg von dem zwischen der ersten (4) und zweiten (5) Wand positionierten Tier bewegt, um einen Teil des Körpers des Tiers freizulegen, und in einer zweiten Richtung auf das Tier zu bewegt, wobei das bewegliche Segment derart konfiguriert ist, dass es bei Bewegungen in der zweiten Richtung Rückwärtsbewegungen des Tiers verhindert, sobald die erste Wand weg von der ersten Wand bewegt wird.

2. Tierbehandlungsvorrichtung nach Anspruch 1, wobei die Wände (4, 5) im Wesentlichen rechteckig sind und zwei kurze Kanten und zwei lange Kanten, die im Wesentlichen parallel angeordnet sind, aufweisen.

3. Tierbehandlungsvorrichtung nach Anspruch 1 oder 2, wobei die zweite Wand (5) einen Betätigungsmechanismus (5) zum Schwenken der Wand umfasst.

4. Tierbehandlungsvorrichtung nach Anspruch 3, wobei der Betätigungsmechanismus ein Stößel (8) ist.

5. Tierbehandlungsvorrichtung nach Anspruch 4, wobei der Stößel (8) ein auf der Basis (6) montiertes Gehäuse (8b) und einen Kolben (8a), der zum Eingreifen in einen Montagepunkt an der zweiten Wand (5) konfiguriert ist, umfasst.

6. Tierbehandlungsvorrichtung nach Anspruch 5, wobei der Kolben (8a) im Gehäuse (8b) verschiebbar ist.

7. Tierbehandlungsvorrichtung nach einem der Ansprüche 1 - 6, wobei das erste Segment (5a):
• gelenkig mit dem zweiten Segment (5b) verbunden ist; und/oder
• im Wesentlichen dreieckig ist, wobei die längste Kante des Dreiecks sich von einer oberen Ecke der zweiten Wand (5) zu oder nahe dem Mittelpunkt einer Unterkante der Wand erstreckt.

8. Tierbehandlungsvorrichtung nach einem der Ansprüche 1 - 7, wobei die zweite Wand (5) ein drittes Segment (5c) der Wand umfasst, das relativ zum zweiten Segment (5b) der zweiten Wand (5) schwenkbar ist.

9. Tierbehandlungsvorrichtung nach Anspruch 8, wobei das dritte Segment (5c):
• gelenkig mit dem zweiten Segment (5b) verbunden ist; und/oder
• im Wesentlichen rechteckig ist, wobei die längeren Kanten des Rechtecks in einer im Wesentlichen vertikalen Orientierung angeordnet sind.

10. Tierbehandlungsvorrichtung nach einem der Ansprüche 1 - 9, wobei die Vorrichtung ein Verlagerungssystem umfasst, wobei das System derart konfiguriert ist, dass es mindestens das erste Segment (5a) der zweiten Wand (5) bewegt.

11. Tierbehandlungsvorrichtung nach Anspruch 10, wobei das Verlagerungssystem:
• ein verschiebbarer länglicher Balken ist, der das erste (5a) und zweite (5b) Segment überspannt und/oder
• ein Stößel (12) ist.

12. Tierbehandlungsvorrichtung nach Anspruch 11, wobei der Stößel (12):
• ein auf dem zweiten Segment (5b) montiertes Gehäuse und einen zum Eingreifen in einen Montagepunkt des ersten Segments (5a) konfigurierten Kolben (12a) umfasst; und/oder
• bidirektional mit zwei Kolben ist, die jeweils zum Eingreifen in einen Montagepunkt am ersten Segment (5a) und einem dritten Segment (5c) der zweiten Wand konfiguriert ist.

13. Tierbehandlungsvorrichtung nach Anspruch 12, wobei das Verlagerungssystem einen zweiten Stößel umfasst, wobei der zweite Stößel ein auf dem zweiten Segment (5b) montiertes Gehäuse und einen zum Eingreifen in einen Montagepunkt auf einem dritten Segment (5c) konfigurierten Kolben umfasst.

14. Tierbehandlungsvorrichtung nach Anspruch 3 oder 10, wobei die Vorrichtung mit einer Kontrolltafel für den Betätigungsmechanismus und/oder das Verlagerungssystem verbunden ist, wobei die Kontrolltafel eine programmierbare Logiksteuerung umfasst.

15. Tragbares Tierbehandlungssystem, umfassend ein integriertes Fahrwerk (15) und die Vorrichtung nach Anspruch 1.

16. Verfahren zur Verwendung der Tierbehandlungsvorrichtung nach Anspruch 1, umfassend die Schritte:
a) Eintretenlassen eines Tiers in die Tierbehandlungsvorrichtung und Stehenlassen auf der Basis;
b) Bewegen der zweiten Wand (5) relativ zur ersten Wand (4), wodurch das Tier (3) zwischen den Wänden (4, 5) geklemmt wird;
c) Bewegen eines ersten Segments (5a) der zweiten Wand (5) in einer ersten Richtung, um einen Teil des Körpers des Tiers freizulegen, um eine Behandlung am Tier vorzunehmen;
d) Bewegen des ersten Segments (5a) der zweiten Wand (5) in einer zweiten Richtung, um Rückwärtsbewegungen des Tiers zu verhindern, sobald die zweite Wand (5) weg von der ersten Wand (4) bewegt worden ist.

## Revendications

1. Dispositif de manipulation d'animal utilisé dans un système portatif de manipulation de bétail comprenant un châssis à roues, dans lequel le dispositif de manipulation d'animal comprend :
une base sensiblement rectangulaire (6) ayant deux bords plus longs et deux bords plus courts,
une première paroi (4), et
une seconde paroi (5), les parois (4, 5) étant jointes aux côtés plus longs de la base et, pendant l'utilisation, étant sensiblement à des angles droits par rapport à la base (6), et la seconde paroi (5) étant mobile de manière pivotante par rapport à la première paroi (4) afin de maintenir un animal (3) debout sur la base (6) et positionnée entre la première (4) et la seconde (5) parois,
**caractérisé en ce que**
la seconde paroi (5) comprend une pluralité de segments (5a, 5b, 5c), au moins un segment (5a) étant mobile de manière pivotante par rapport à un second segment (5b) de la paroi, le segment mobile (5a) étant configuré pour se déplacer dans une première direction à l'écart de l'animal positionné entre la première (4) et la seconde (5) parois, afin d'exposer une partie du corps de l'animal, et une seconde direction qui va vers l'animal, le segment mobile étant configuré pour, lorsqu'il est déplacé dans la seconde direction, empêcher tout mouvement vers l'arrière de l'animal une fois que la seconde paroi est écartée de la première paroi.

2. Dispositif de manipulation d'animal selon la revendication 1, dans lequel les parois (4, 5) sont sensiblement rectangulaires et possèdent deux côtés courts et deux côtés longs disposés sensiblement en parallèle.

3. Dispositif de manipulation d'animal selon la revendication 1 ou 2, dans lequel la seconde paroi (5) comprend un mécanisme d'actionnement destiné à déplacer la paroi de manière pivotante.

4. Dispositif de manipulation d'animal selon la revendication 3, dans lequel le mécanisme d'actionnement est un vérin (8).

5. Dispositif de manipulation d'animal selon la revendication 4, dans lequel le vérin (8) comprend un carter (8b), monté sur la base (6), et un piston (8a) configuré pour s'engager avec un point de montage sur la seconde paroi (5).

6. Dispositif de manipulation d'animal selon la revendication 5, dans lequel le piston (8a) est mobile de manière coulissante dans le carter (8b).

7. Dispositif de manipulation d'animal selon l'une quelconque des revendications 1 à 6, dans lequel le premier segment (5a) est :
- articulé sur le second segment (5b) ; et/ou
- sensiblement de forme triangulaire, avec le bord le plus long du triangle qui s'étend entre un angle supérieur de la seconde paroi (5) et le centre d'un bord inférieur de la paroi (ou à proximité de celui-ci).

8. Dispositif de manipulation d'animal selon l'une quelconque des revendications 1 à 7, dans lequel la seconde paroi (5) comprend un troisième segment (5c) de la paroi mobile de manière pivotante par rapport au second segment (5b) de la seconde paroi (5).

9. Dispositif de manipulation d'animal selon la revendication 8, dans lequel le troisième segment (5c) est :
- articulé sur le second segment (5b) ; et/ou
- sensiblement de forme rectangulaire, les bords plus longs du rectangle étant prévus selon une orientation sensiblement verticale.

10. Dispositif de manipulation d'animal selon l'une quelconque des revendications 1 à 9, dans lequel le dispositif comprend un système de déplacement, le système étant configuré pour déplacer au moins le premier segment (5a) de la seconde paroi (5).

11. Dispositif de manipulation d'animal selon la revendication 10, dans lequel le système de déplacement est :
- une barre allongée coulissante qui s'étend sur le premier (5a) et le second (5b) segments ; et/ou
- un vérin (12).

12. Dispositif de manipulation d'animal selon la revendication 11, dans lequel le vérin (12) :
- comprend un carter, monté sur le second segment (5b), et un piston (12a) configuré pour s'engager avec un point de montage sur le premier segment (5a) ; et/ou
- est bidirectionnel avec deux pistons, chacun configurés pour s'engager avec un point de montage sur le premier segment (5a) et un troisième segment (5c) de la seconde paroi (5).

13. Dispositif de manipulation d'animal selon la revendication 12, dans lequel le système de déplacement comprend un second vérin, le second vérin comprenant un carter monté sur le second segment (5b), et un piston configuré pour s'engager avec un point de montage sur un troisième segment (5c).

14. Dispositif de manipulation d'animal selon la revendication 3 ou 10, dans lequel le dispositif est relié à un panneau de commande destiné au mécanisme d'actionnement et/ou au système de déplacement, dans lequel le panneau de commande comprend un contrôleur à logique programmable.

15. Système de manipulation portatif de bétail comprenant un châssis à roues (15) et le dispositif de manipulation d'animal selon la revendication 1.

16. Procédé d'utilisation du dispositif de manipulation d'animal selon la revendication 1, le procédé comprenant les étapes de :
a) permission d'un animal de pénétrer dans le dispositif de manipulation d'animal et de rester debout sur la base ;
b) déplacement de la seconde paroi (5) par rapport à la première paroi (4), afin de fixer l'animal (3) entre les parois (4, 5) ;
c) déplacement d'un premier segment (5a) de la seconde paroi (5) dans une première direction afin d'exposer une partie du corps de l'animal de façon à effectuer un traitement sur l'animal ;
d) déplacement du premier segment (5a) de la seconde paroi (5) dans une seconde direction afin d'empêcher tout mouvement vers l'arrière de l'animal une fois que la seconde paroi (5) est écartée de la première paroi (4).
